# EUROPEAN PATENT SPECIFICATION

(11) **EP 3 246 871 B1**
(45) Date of publication and mention of the grant of the patent: **12.02.2025**
(21) Application number: 17172005.5
(22) Date of filing: 19.05.2017
(51) Int. Cl.: G06T 3/40, G06T 7/35

(54) **IMAGE SPLICING**
BILDZUSAMMENTSETZUNG
COMPOSITION D'IMAGE

(30) Priority: 20.05.2016 CN 201610343617
(43) Date of publication of application: 22.11.2017
(73) Proprietor: Neusoft Medical Systems Co., Ltd., Hunnan District Shenyang Liaoning 110167 (CN)
(72) Inventor: ZOU, Yuyue, Shenyang, Liaoning 110167 (CN); HONG, Shuang, Shenyang, Liaoning 110167 (CN); CAO, Fengqiu, Shenyang, Liaoning 110167 (CN); KANG, Yan, Shenyang, Liaoning 110167 (CN)
(74) Representative: Grünecker Patent- und Rechtsanwälte PartG mbB

(56) References cited:
- EP-A1- 2 423 873
- US-A1- 2006 155 577
- US-A1- 2008 108 893
- US-A1- 2010 265 314
- US-A1- 2013 004 100
- VIOLA P ET AL: "ALIGNMENT BY MAXIMIZATION OF MUTUAL INFORMATION", INTERNATIONAL JOURNAL OF COMPUTER VISION, KLUWER ACADEMIC PUBLISHERS, NORWELL, US, vol. 24, no. 2, 1 September 1997 (1997-09-01), pages 137 - 154, XP000703579, ISSN: 0920-5691, DOI: 10.1023/A:1007958904918

## Description

### TECHNICAL FIELD

The present disclosure relates to image processing, and particularly to image splicing.

### BACKGROUND

As wide-range panoramic medical images may better help doctors to perform more comprehensive and intuitive evaluation on lesions and tissues surrounding the lesions, medical image splicing has been widely applied to the research of medical images, for example, evaluating the lesions of spines by magnetic resonance images.

US2010265314A1 discloses that in recording an image file that is shot by panoramic image shooting, a plurality of pieces of image data are recorded in the image file, and therefore there is a problem that the file size increases. Although it is possible to reduce the file size by applying higher compression processing using JPEG or the like, there is a problem that the image degradation appears noticeably. With respect to an input image file, it is determined whether or not it is the one obtained by panoramic image shooting, and then at the time of recording, one of two overlap areas is deleted and the positional information on the other overlap area is attached. Thereafter, at the time of transmission or printing, the overlap area is restored based on the attached positional information. In this manner, the file size at the time of recording is reduced without degrading the image.

US2013004100A1 discloses that in accordance with an example embodiment a method and apparatus is provided. The method comprises facilitating receiving of a first image and a second image. The method also comprises facilitating receiving of location information of a movable object and generating a panorama image based on the first image, the second image and the location information of the movable object.

EP2423873A1 discloses that an apparatus for generating an overview image of a plurality of images comprises a storage unit and an image processor. The storage unit stores a plurality of processed images of the overview image and is able to provide the overview image containing the plurality of processed images at their assigned positions for displaying. The image processor determines feature points of a new image and compares the determined feature points of the new image with feature points of a stored processed image to identify common feature points and to obtain 3-dimensional positions of the common feature points. Further, the image processor determines common feature points located within a predefined maximum distance of relevance to a reference plane based on the 3-dimensional positions of the common feature points to identify relevant common feature points. Further, the image processor processes the new image by assigning the new image to a position in the overview image based on a comparison of an image information of each relevant common feature point of the new image with an image information of each corresponding relevant common feature point of the stored processed image without considering common feature points located beyond the predefined maximum distance of relevance to the reference plane.

US2006155577A1 discloses that one anatomically based medical information processing procedure involves acquiring one or more medical imaging data sets, and dividing and/or merging particular medical imaging data sets to form one or more anatomically based data sets. An anatomically based data set may comprise medical imaging data corresponding to an anatomical region that subsumes or is subsumed by an anatomical region corresponding to a medical imaging data set used to generate the anatomically based data set. Different medical imaging data sets and/or anatomically based data sets may correspond to different anatomical regions and/or imaging modalities. Display of one or more acquired medical imaging data sets and/or anatomically based data sets may be facilitated through a GUI, which may include a menu organized by anatomical region.

US2008108893A1 discloses that a method and system for automatically aligning multiple MR volumes in whole-body MR scans is disclosed. The method and system are capable of automatic alignment of leg-volumes in whole-body MR scans that is insensitive to leg movement. In order to align upper and lower MR volumes, an automatic determination may be made that a junction between the upper and lower MR volumes is in a leg region. The lower MR volume is then divided into left and right regions, and each of the left and right regions are independently aligned with the upper MR volume. One of the left and right regions is then adjusted with respect to the other one to compensate for shifting of the legs with respect to each other.

Alignment by maximization of mutual information (VIOLA P ET AL, International Journal of Computer Vision 24(2), 137-154, 1997) discloses that a new information-theoretic approach is presented for finding the pose of an object in an image. The technique does not require information about the surface properties of the object, besides its shape, and is robust with respect to variations of illumination. In our derivation few assumptions are made about the nature of the imaging process. As a result the algorithms are quite general and may foreseeably be used in a wide variety of imaging situations.

NEUSOFT MEDICAL SYSTEMS CO., LTD. (NMS), founded in 1998 with its world headquarters in China, is a leading supplier of medical equipment, medical IT solutions, and healthcare services. NMS supplies medical equipment with a wide portfolio, including CT, Magnetic Resonance Imaging (MRI), digital X-ray machine, ultrasound, Positron Emission Tomography (PET), Linear Accelerator (LINAC), and biochemistry analyzer. Currently, NMS' products are exported to over 60 countries and regions around the globe, serving more than 5,000 renowned customers. NMS's latest successful developments, such as 128 Multi-Slice CT Scanner System, Superconducting MRI, LINAC, and PET products, have led China to become a global high-end medical equipment producer. As an integrated supplier with extensive experience in large medical equipment, NMS has been committed to the study of avoiding secondary potential harm caused by excessive X-ray irradiation to the subject during the CT scanning process.

### SUMMARY

The present disclosure provides methods, apparatuses and computer-readable mediums for image splicing, which can improve accuracy and efficiency of image splicing.

The present invention is defined according to claims 1, 8 and 9.

The details of one or more embodiments of the subject matter described in the present disclosure are set forth in the accompanying drawings and description below. Other features, aspects, and advantages of the subject matter will become apparent from the description, the drawings, and the claims.

### BRIEF DESCRIPTION OF DRAWINGS

FIG. 1 is a flowchart of a process of image splicing in accordance with one or more examples of the present disclosure.
FIG. 2 is a to-be-spliced head and neck image in accordance with one or more examples of the present disclosure.
FIG. 3 is a to-be-spliced neck and chest image in accordance with one or more examples of the present disclosure.
FIGS. 4A and 4B are schematic images of determining an overlap area of the images of FIGS. 2 and 3.
FIGS. 5A and 5B are schematic diagrams of registration processing in accordance with one or more examples of the present disclosure.
FIG. 6 is an image after splicing processing the images of FIGS. 2 and 3.
FIG. 7 is a schematic diagram of an image splicing apparatus in accordance with one or more examples of the present disclosure.
FIG. 8 is a block diagram of an image splicing apparatus in accordance with one or more another examples of the present disclosure.

### DETAILED DESCRIPTION

Image splicing can perform local registration on sequence images having overlap areas and splice the sequence images together according to the overlap areas so as to obtain a panorama with a larger viewing angle and a wider range. In an example, visual overlap area fusion is realized by manual translation and other operations of the sequence images by a user to determine and splice the overlap areas, which causes low accuracy and low efficiency.

In another example, points, lines, edges, shapes and/or other features in to-be-spliced images are extracted by image feature recognition, and the to-be-spliced images are registered according to the features and then are spliced together. However, when medical image noise is large and the images have no obvious features, the example image splicing suffers from large amount of calculation and long time consumption.

Implementations of the present disclosure provide a method of image splicing, which can improve accuracy and efficiency of image splicing. This method can perform determination of overlap area and seamless splicing based on device scanning information and image registration . The overlap area of two or more groups of to-be-spliced images can be determined according to the device scanning information provided by the two or more groups of to-be-spliced images so as to save calculation time and find the overlap area more accurately. Then, the two or more groups of to-be-spliced images can be registered by extending the overlap area, e.g., peripherically, to obtain a to-be-registered area and registering the two or more groups of to-be-spliced images based on the to-be-registered area. Volume data of the two or more groups of to-be-spliced images can be then spliced together according to a transformation matrix or a registration operator that is used for the registration of the to-be-registered areas of the two or more groups of to-be-spliced images. Thus, an overall effect of a splicing result can be ensured, which can be helpful for a doctor to browse images to diagnose diseases.

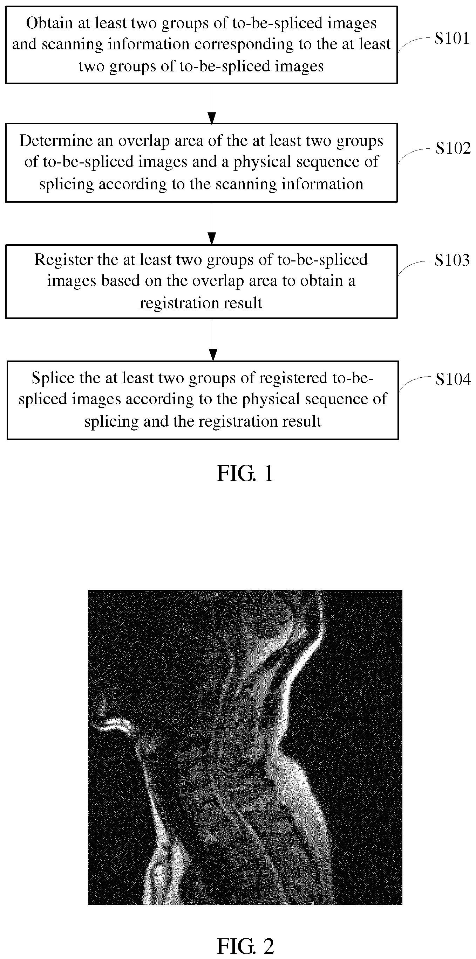

FIG. 1 illustrates a flowchart of a process of image splicing in accordance with one or more examples of the present disclosure. The process of image splicing includes steps S101-S104.

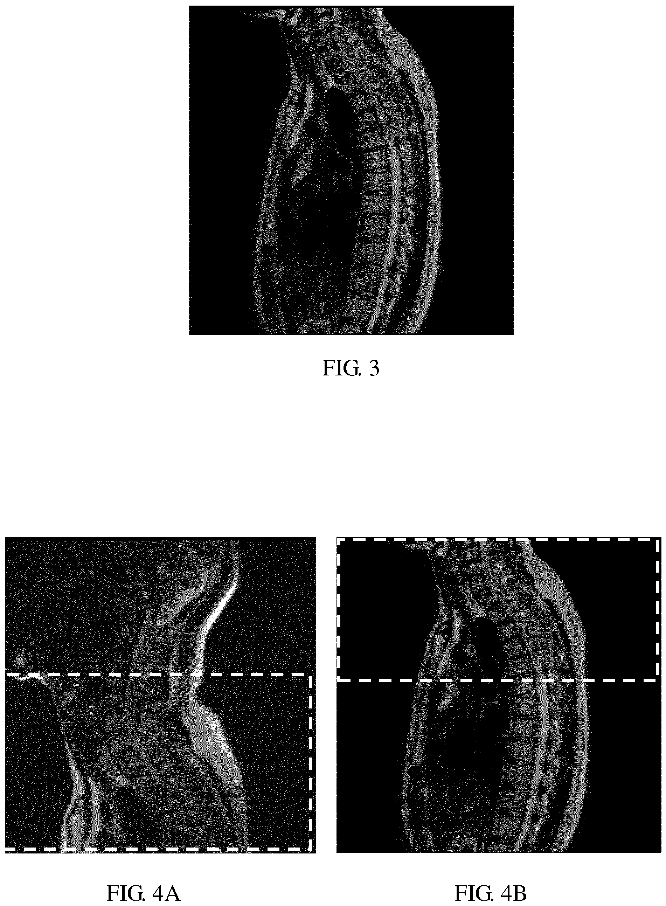

In step S101, at least two groups of to-be-spliced images and device scanning information corresponding to the at least two groups of to-be-spliced images are obtained. The to-be-spliced images can be obtained by a device scanning one or more regions of an object. The device scanning information is associated with the scanning the one or more regions of the object of the device. The device can be a device for collecting image sequences, which includes, but not limited to, a computer tomography (CT) device, a magnetic resonance imaging (MRI) device, an ultrasonic imaging device, a nuclear medical imaging device (such as a PET device), a medical X ray device or any other medical imaging devices. As an example, FIGS. 2 and 3 illustrate two to-be-spliced images, where FIG. 2 illustrates a to-be-spliced head and neck image and FIG. 3 illustrates a to-be-spliced neck and chest image.

In some implementations, obtaining the device scanning information corresponding to the at least two groups of to-be-spliced images includes: obtaining one or more pieces of information of image positions, image orientations, pixel spacing, slice thicknesses, anatomical orientation, object positions and scanning beds corresponding to the at least two groups of to-be-spliced images. In some examples, the device scanning information includes the information of image positions and pixel spacing of the to-be-spliced images. The image position can be a space coordinate of a top left corner of an image, and the space coordinate corresponds to an object coordinate. The space coordinate refers to a coordinate position in the World Coordinate System (WCS), while the object coordinate refers to a coordinate position in the Anatomy Coordinate System (ACS). The pixel spacing denotes an interval of points in an image. The image orientation denotes a scanning direction. The slice thickness denotes scanning intervals of different images contained in a group of images. The object position denotes a coordinate axis direction of scanning. The device scanning information can be read from an image file (e.g., a digital imaging and communications in medicine (DICOM) file). Note that the device scanning information can include other device scanning information, and this is not limited herein.

Referring back to FIG. 1, in step S102, an overlap area of the at least two groups of to-be-spliced images and a physical sequence of splicing are determined according to the obtained device scanning information.

In some implementations, determining the overlap area of the at least two groups of to-be-spliced images and the physical sequence of splicing according to the device scanning information includes: determining space coordinate information of three-dimensional volume data of the at least two groups of to-be-spliced images according to the device scanning information, determining the overlap area according to the space coordinate information of the three-dimensional volume data of the to-be-spliced images, and determining the physical sequence of splicing according to the space coordinate information of the three-dimensional volume data of the to-be-spliced images.

In accordance with the device scanning information, including but not limited to, the image positions, the image orientations, the pixel spacing, the slice thicknesses, the object positions, the scanning beds and/or other information provided by header files of the two or more groups of to-be-spliced images (e.g., in DICOM format), the space coordinate information of the three-dimensional volume data of the two or more groups of image sequences is obtained, and the overlap area is determined by comparing overlap areas of the space coordinates of the three-dimensional volume data of the two or more groups of image sequences. As the images of the same object adopt the same object coordinate space when the images in DICOM format are generated, a part constituted by points having the same coordinate is the overlap area between the images.

Referring to images in FIGS. 2 and 3, according to the header file information of the images, the scanning position image coordinates and other key information in twice scanning (or double scanning) are obtained to determine the physical sequence of splicing and the overlap area of the two images. Spine image splicing is taken as an example for illustration, where one or more of the pieces of information of image positions, image orientations, pixel spacing, slice thicknesses, object positions and scanning beds corresponding to the to-be-spliced images are obtained according to scanning position TAG labels in the header file information of sequence DICOM images of twice scanning. The image position records the space coordinates of points on the top left corner of each layer of images, the slice thickness records the thickness of each layer of the image, the pixel spacing records the distance between each two pixel points, and the image orientation records an angle between an image and a coordinate axis. The coordinate of each point on the image may be calculated according to the above-mentioned information. For example, the coordinate of each point of the image may be obtained according to the image position and the pixel spacing. The image position records the space coordinate of the point on the top left corner of the image, and the pixel spacing denotes the distance between two pixel points, and then with the space coordinate of the point on the top left corner of the image as reference, the space coordinate of each pixel point may be obtained by calculating by use of the pixel distance denoted by the pixel spacing. As another example, when there is an angle between scanning direction of the image and a preset coordinate axis, the space coordinate of each pixel point may be obtained according to an angle between the image denoted by image orientation and the coordinate axis. As another example, after the space coordinates of all points on one image in a group of images are obtained, the space coordinates of the pixel points of subsequent images may be obtained according to the slice thickness information. Of course, the above descriptions are only illustrative, the space coordinate information of the three-dimensional volume data of the at least two groups of to-be-spliced images may also be determined in other manners, and this is not limited herein.

Since medical images are three-dimensional volume data, the overlap area V of the to-be-spliced images is determined by comparing the space coordinate of each point on the volume data of two groups of images. The coordinate ranges and the influence degrees of different to-be-spliced images are different, for example, x and y coordinate ranges in a spine image are substantially the same and both cover the width and the thickness of the whole object, but the difference is mainly concentrated in z coordinate (a direction z in an object coordinate system where head points to sole). The z coordinate ranges of the obtained two groups of images are assumed as 75 mm to 300 mm and 240 mm to 700 mm, respectively. The overlap range of the two groups of images is within the range of 240 mm to 300 mm, the physical sequence of splicing can be that the former group of images having the z coordinate range of 75 mm to 300 mm is at an upper side and the latter group of images having the z coordinate range of 240 mm to 700 mm is at a lower side. The reference lies in that the direction of a vertical axis in an object coordinate system is assumed as pointing from head to sole, the top of the head is at 0 in the vertical axis, namely the position with a smaller coordinate is a physical upper part of the object, and the coordinate range of FIG. 2 is smaller, accordingly the image of FIG.2 in the splicing sequence is at the upper side.

It can be seen according to the above analysis that, the image of FIG. 2 is the upper side relative to the image of FIG. 3 in the object coordinate system, namely during the splicing, the image of FIG. 2 is at the upper side and the image of FIG. 3 is at the lower side. A coordinate overlap area, that is, a shared coordinate area of two groups of images is the overlap area V of the to-be-spliced images, as shown in rectangular areas in white imaginary lines in FIGS. 4A and 4B.

Referring back to FIG. 1, in step S103, the at least two groups of to-be-spliced images are registered based on the overlap area to obtain a registering result.

To improve image processing effect, the determined overlap area is extended to obtain the to-be-registered area. In some examples, the registration can be achieved by an image registration algorithm such as ICP (Iterative Closest Points), NDT (Normal Distribution Transform), and so on.

The registration in step S103 includes extending the overlap area to obtain the to-be-registered area and registering the at least two groups of to-be-spliced images based on the to-be-registered area. The registration in step S103 includes selecting an image processing operator. The image processing operator is configured to reduce noise of an image. The selection of the image processing operation can be based on a noise level of an image. The image processing operator is an operator for filtering or smoothing an image and configured to be used for edge detection and process, including but not limited to, a Roberts operator (an operator finding edges by using a local differential operator), a Sobel operator (an edge detecting operator), a Prewitt operator (a first order differentiation operator used particularly in edge detection algorithms), a Laplacian operator (a second order differentiation operator), a Gaussian-Laplacian operator, or any other image processing operators. The size of the operator can be used to extend an image. For example, the Gaussian-Laplacian operator is a 5*5 matrix. Therefore, the overlap area V can be extended with a particular pixel size, for example, 5 pixels (corresponding to the size of the Gaussian-Laplacian operator), toward the periphery (or up and down) on the basis of the overlap area, so the range of the z coordinate of the overlap area in the image volume data is changed from 240 mm-300 mm into 235 mm-305 mm. Of course, the overlap area may be extended in other manners to obtain the to-be-registered area. For example, an extension threshold may be preset or predetermined, and the size of the extension range is then determined according to the extension threshold, such as 10 pixels, 15 pixels, and so on. Of course, the above descriptions are merely illustrative and are not to be construed as limiting the present disclosure, and those skilled in the art may select other manners to extend the overlap area to obtain the to-be-registered area.

In some cases, image registration refers to a process of matching and superimposing two or more images obtained at different times, by different program devices or under different conditions (including weather, illumination, camera position and angle, or the like). In the present disclosure, the at least two groups of to-be-spliced mages are registered based on the to-be-registered area so as to register the points having the same coordinate or feature in the to-be-registered area to the same position of a spliced image.

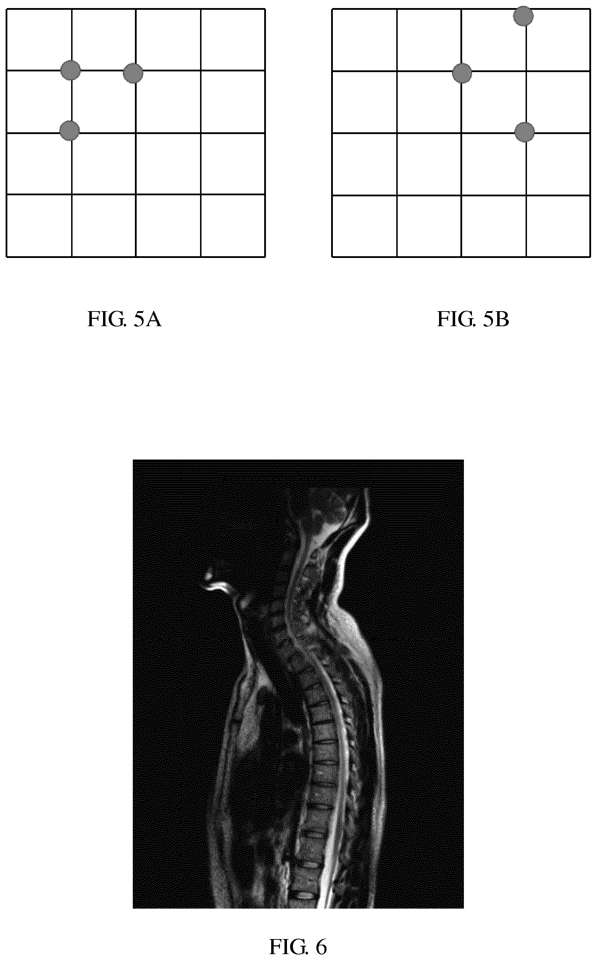

In some examples, registering the at least two groups of to-be-spliced images based on the to-be-registered area to obtain a registration result includes: registering points having the same object coordinate in the to-be-registered area to the same position of the spliced image through a registration transformation matrix according to the object coordinate information in the DICOM information. For example, the points having the same object coordinate may be registered to the same position of the image through the registration transformation matrix based on the object coordinate in the DICOM information. A relative registration manner can be adopted herein, where a group of images is used as reference images, and other images are registered with the group of images. The registration transformation matrix is utilized in one or more operations of translation, scale transformation, rotation and the like for images. In some cases, the registration transformation matrix may be determined when the points having the same object coordinate in two groups of images are known. For example, [image coordinate of overlap point of image 2] * [transformation matrix] = [image coordinate of overlap point of image 1]. For example, as shown in FIGS. 5A and 5B, three points in the two figures correspond to the same object coordinate. During the image registration, one group of images may be used as reference images, and the other group of images is used as transformed images. For example, FIG. 5A illustrates the reference image and FIG. 5B illustrates the transformed image. The transformed image in FIG. 5B is processed by the transformation matrix to rotate the pixel points in FIG. 5B clockwise by 45° and to scale or zoom the transformed image to have the same size as the reference image in FIG. 5A, and the pixel points the transformed image in FIG. 5B having the same object coordinate as the corresponding pixel points in the reference images are then translated to the same coordinate positions to accomplish the image registration. The translation can be a coordination position translation between the ACS and WCS.

In some examples, registering the at least two groups of to-be-spliced images based on the to-be-registered area to obtain the registration result includes: obtaining a registration parameter through a mutual information maximization method, and registering the points having a same feature in the to-be-registered area to a same position of an image based on the registration parameter. The registration parameter is configured to measure a similarity between different images, e.g., between features in the pixel points of the at least two groups of to-be-spliced images. Mutual information (or interactive information) is a measure of statistical relevance of two random variables, and the to-be-registered area V may be registered through the mutual information maximization method. If two images are matched, the mutual information (or interactive information) thereof reaches a maximum value. The mutual information of two groups of to-be-spliced images may be calculated, and the registration parameter obtained when the mutual information is the maximum is used as the registration parameter of the registration. In some examples, a joint probability histogram and an edge probability histogram of the overlap area of two images may be applied to estimate the mutual information (or interactive information). In some examples, a Parzen window probability density estimation method may be applied to estimate the mutual information (or interactive information). The manner of registering the points having the same feature in the to-be-registered area to the same position based on the registration parameter can be similar to the manner of registering the points having the same object coordinate in the to-be-registered area to the same position of image based on the transformation matrix. For example, the registration parameter is minimum when the registered points have the same feature. And when the points with the same features are registered, a mean value of the points can be used to replace original point values of the images. The registration result can include the registration parameters and the corresponding relationships of the points with the same features between the at least two groups of to-be-spliced images.

Referring back to FIG. 1, in step S104, the at least two groups of registered to-be-spliced images are spliced according to the physical sequence of splicing and the registration result.

In some implementations, splicing the at least two groups of registered to-be-spliced images according to the physical sequence of splicing and the registration result includes: using one group of the at least two groups of to-be-spliced images as reference images, processing the other to-be-spliced images using a registration transformation matrix or a registration operator, and splicing the reference images and the other processed to-be-spliced images according to the physical sequence of splicing. The registration transformation matrix can be obtained, e.g., as described in S103. The registration operator can be a vector having a similar function as the registration transformation matrix.

For example, two groups of images may be spliced together according to the registration result, and resolution, window width, window position and other basic information can be unified during the splicing, and smoothing and other processing can be then performed on the spliced image. Images as shown in FIGS. 2 and 3 are still taken as an example for illustration. Assuming that the head and neck image in FIG. 2 is used as a reference image to transform the volume data of the neck and chest image in FIG. 3 through a transformation matrix, which can be the registration transformation matrix obtained in S103. Then, only one of identical parts of volume data of the two images, namely the overlap areas after the registration, is retained, and the other parts of the images are added to obtain spliced volume data. An interpolation operation may be used in the process, since pixel lattice points may be increased or decreased in the registration due to rotation, scale transformation and other operations. For example, the interpolation operation may include nearest neighbour interpolation, bilinear interpolation, bicubic interpolation or other interpolation methods.

Before splicing the reference images and the other processed to-be-spliced images according to the physical sequence of splicing, window width and window position of the at least two groups of to-be-spliced images may be unified to obtain a consistent gray scale display range; and/or, resolution of the at least two groups of to-be-spliced images may be unified. The window width can denote a range of display signal intensity values, the window position can denote a central position of image gray scale, and the window width and the window position can affect display effect. Each layer of images can be unified to have the same window width and the same window position, so that the processed two groups of to-be-spliced images can have a consistent gray scale display range or contrast, and thus a better display effect can be obtained.

Further, smoothing and other operations may also be performed on images. An image smoothing method may include a neighbourhood averaging method, a linear smoothing method, or a convolution smoothing method. The neighbourhood averaging method is to add a gray value of a pixel in an original image with gray values of neighbouring 8 pixels surrounding the pixel and calculate an average value as a gray value of the pixel in a new image. As shown in FIG. 6, the image in FIG. 6 illustrates a final image after splicing.

In some cases, visual overlap area fusion is achieved through translation and other operations manually by a user, or the features of two groups of images are recognized manually. As medical image noise is very large and images have no obvious features, the amount of calculation can be very large, and it can take a lot of time to process the images. However, the standard medical image, such as in DICOM format, records some key parameters during scanning, which greatly facilitates finding the overlap area of images. As the manner of obtaining overlap area of two groups (or multiple groups) of images in the present disclosure is based on the scanning information which is different from manual circling selection or manual feature point selection and other manners, the accuracy of finding the overlap area is improved and the time is saved.

The above is a detailed description of a method of image splicing in accordance with one or more examples of the present disclosure, and an image splicing apparatus in accordance with one or more examples of the present disclosure will be described below in detail.

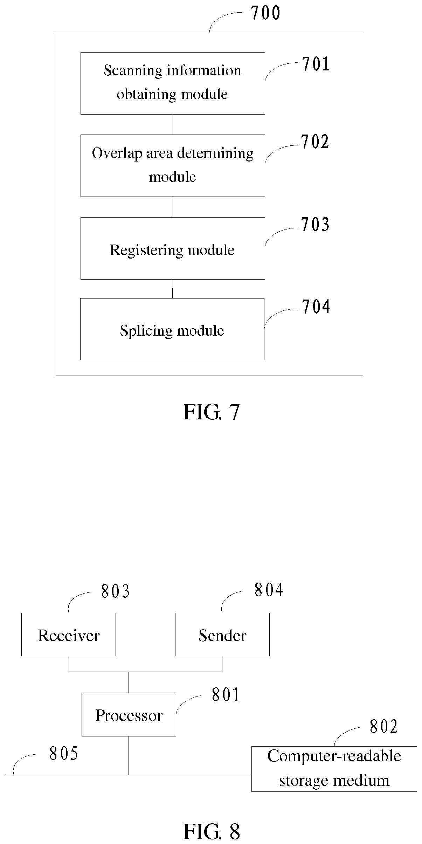

FIG. 7 is a schematic diagram of an image splicing apparatus in accordance with one or more examples of the present disclosure.

The image splicing apparatus 700 includes a scanning information obtaining module 701, an overlap area determining module 702, a registering module 703 and a splicing module 704.

The scanning information obtaining module 701 is configured to obtain at least two groups of to-be-spliced images and scanning information corresponding to the at least two groups of to-be-spliced images.

The overlap area determining module 702 is configured to determine an overlap area of the at least two groups of to-be-spliced images and a physical sequence of splicing according to the scanning information.

The registering module 703 is configured to register the at least two groups of to-be-spliced images based on the overlap area to obtain a registration result.

The splicing module 704 is configured to splice the at least two groups of registered to-be-spliced images according to the physical sequence of splicing and the registration result.

Specifically, the scanning information obtaining module 701 is configured to obtain the scanning information, and the overlap area determining module 702 is configured to determine the overlap area of the at least two groups of to-be-spliced images and the physical sequence of splicing according to the scanning information. The scanning information obtaining module 701 is further configured to obtain one or more pieces of information of image positions, image orientations, pixel spacing, slice thicknesses, object positions and scanning beds corresponding to the to-be-spliced images. In an example, the scanning information obtaining module 701 is at least configured to obtain the information of the image positions and the pixel spacing of the to-be-spliced images. The image position can be a space coordinate of a top left corner of the image, and the space coordinate corresponds to an object coordinate space. The pixel spacing denotes an interval of points in the image. The image orientation denotes a scanning direction. The slice thickness denotes scanning intervals of images in a group of images. The object position denotes a coordinate axis direction of scanning. Of course, the overlap area of the images and the physical sequence of splicing may also be determined by employing other scanning information, and this is not limited herein. The device can be a device for collecting image sequence, including but not limited to, a computer tomography (CT) device, a magnetic resonance imaging (MRI) device, an ultrasonic imaging device, a nuclear medical imaging device (such as a PET device) or a medical X ray device and other medical imaging devices.

After the scanning information obtaining module 701 obtains the device scanning information, the overlap area determining module 702 determines space coordinate information of three-dimensional volume data of the at least two groups of to-be-spliced images according to the scanning information, and determines the overlap area and the physical sequence of splicing according to the space coordinate information. The overlap area determining module 702 includes a space coordinate determining module, an area determining module and a scanning sequence determining module.

The space coordinate determining module is configured to determine the space coordinate information of the three-dimensional volume data of the at least two groups of to-be-spliced images according to the scanning information.

The area determining module is configured to determine the overlap area according to the space coordinate information of the three-dimensional volume data of the to-be-spliced images.

The scanning sequence determining module is configured to determine the physical sequence of splicing according to the space coordinate information of the three-dimensional volume data of the to-be-spliced images.

If image registration and splicing processing is performed by directly using the overlap area, the processing effect of image edges is poor. In order to improve the image processing effect, the determined overlap area is extended to obtain the to-be-registered area in the present disclosure. Therefore, the registering module 703 includes an extending module and a processing module. The extending module is configured to extending the overlap area to obtain the to-be-registered area, and the processing module is configured to registering the at least two groups of to-be-spliced images based on the to-be-registered area. The implementation of the extending module and the processing module will be introduced below in combination with specific implementation scenarios. The extending module is configured to select an image processing operator, determine a size of an extension range according to a size of the image processing operator, and extending the overlap area according to the size of the extension range to obtain the to-be-registered area. The image processing operator is an operator selected for filtering or smoothing image, including but not limited to, a Roberts operator (an operator finding edges by using a local differential operator), a Sobel operator (an edge detecting operator), a Prewitt operator (a first order differentiation operator used particularly in edge detection algorithms), a Laplacian operator (a second order differentiation operator), a Gaussian-Laplacian operator, or any other image processing operators.

In some embodiments, the processing module is further configured to register points having a same object coordinate in the to-be-registered area to a same position of image through a registration transformation matrix according to the object coordinate information in medical digital imaging and communication DICOM information. For example, the points having the same object coordinate may be registered to the same position of image through the registration transformation matrix based on the object coordinate in DICOM information. A relative registration manner is adopted herein where one group of images is used as reference images, and other images are registered with the same. The registration transformation matrix is utilized in one or more operations of translation, scale transformation, rotation and the like for an image. In general, the registration transformation matrix may be determined when the points having the same object coordinate in two groups of images are known.

The registering module 703 is further configured to obtain a registration parameter through a mutual information maximization method, and register the points having a same feature in the to-be-registered area to a same position of the image based on the registration parameter. Mutual information is a measure of the statistical relevance of two random variables, and the to-be-registered area V may be registered based on the mutual information maximization method. The main idea is that if the two images are matched, interactive information thereof reaches a maximum value. The mutual information of two groups of to-be-spliced images may be calculated, and the registration parameter obtained when the mutual information is the maximum is used as the registration parameter for the registration. Generally, a joint probability histogram and an edge probability histogram of the overlap area of two images may be applied to estimate the interactive information, or a Parzen window probability density estimation method may be applied to estimate the interactive information. The manner of registering the points having the same feature in the to-be-registered area to the same position based on the registration parameter is similar to the manner of registering the points having the same object coordinate in the to-be-registered area to the same position based on the transformation matrix.

After the registering module 703 obtains the registration result, the splicing module 704 may splice the at least two groups of registered to-be-spliced images according to the physical sequence of splicing and the registration result. The splicing module 704 further includes a transforming module and a processing module.

The transforming module is configured to use one group of the at least two groups of to-be-spliced images as reference images, and process the other to-be-spliced images by using the registration transformation matrix or the registration operator.

The processing module is configured to splice the reference images and the other processed to-be-spliced images according to the physical sequence of splicing.

Before splicing the reference images and the other processed to-be-spliced images according to the physical sequence of splicing, window width and window position of the at least two groups of to-be-spliced images may be unified, and/or, resolution of the at least two groups of to-be-spliced images may be unified, where the apparatus 700 further includes a first unifying module and/or a second unifying module.

The first unifying module is configured to unify window width and window position unification of the at least two groups of to-be-spliced images to obtain a consistent gray scale display range before splicing the reference images and the other processed to-be-spliced images according to the physical sequence of splicing. The window width and window position information may affect the display effect. Each layer of images is unified to have the same window width and window position, so that the unified two groups of to-be-spliced images have a consistent gray scale display range or contrast, and thus a better display effect is obtained. The second unifying module is configured to unify resolution of the at least two groups of to-be-spliced images before splicing the reference images and the other processed to-be-spliced images according to the physical sequence of splicing to obtain a better display effect.

The functions of the above-mentioned modules may correspond to the processing blocks of the above-mentioned method of image splicing in FIG. 1, and will not be repeated herein.

FIG. 8 is a block diagram of an image splicing apparatus in accordance with one or more another examples of the present disclosure. The image splicing apparatus as shown in FIG. 8 includes at least one a processor 801 (e.g., CPU), a non-transitory computer-readable storage medium 802, a receiver 803, a sender 804 and at least one communication bus 805. The communication bus 805 is configured to realize the connection and communication among the processor 801, the computer-readable storage medium 802, the receiver 803 and the sender 804. The computer-readable storage medium 802 is configured to store computer-readable instructions. The processor 801 is configured to execute the computer-readable instructions stored in the computer-readable storage medium 802.

The non-transitory computer-readable storage medium 802 having instructions stored thereon which, when executed by one or more processors 801, cause the one or more processors 801 to perform a method of image splicing. The method includes obtaining at least two groups of to-be-spliced images, obtaining scanning information corresponding to the at least two groups of to-be-spliced images, determining an overlap area of the at least two groups of to-be-spliced images and a physical sequence of splicing according to the scanning information, registering the at least two groups of to-be-spliced images based on the overlap area to obtain a registration result, and splicing the at least two groups of registered to-be-spliced images according to the physical sequence of splicing and the registration result.

In some examples, the method further includes obtaining one or more pieces of information of image positions, image orientations, pixel spacing, slice thicknesses, object positions and scanning beds corresponding to the to-be-spliced images.

In some examples, the method further includes determining space coordinate information of three-dimensional volume data of the at least two groups of to-be-spliced images according to the scanning information, determining overlap area according to the space coordinate information of the three-dimensional volume data of the to-be-spliced images, and determining physical sequence of splicing according to the space coordinate information of the three-dimensional volume data of the to-be-spliced images.

In some examples, the method further includes extending the overlap area to obtain the to-be-registered area, and registering the at least two groups of to-be-spliced images based on the to-be-registered area.

In some examples, the method further includes selecting an image processing operator, determining a size of an extension range according to a size of the image processing operator, and extending the overlap area according to the size of the extension range to obtain a to-be-registered area.

In some examples, the method further includes registering points having a same object coordinate in the to-be-registered area to a same position of image through a registration transformation matrix according to the object coordinate information in medical digital imaging and communication DICOM information.

In some examples, the method further includes obtaining a registration parameter through a mutual information maximization method, and registering the points having a same feature in the to-be-registered area to a same position of image based on the registration parameter.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

## Claims

1. A computer-implemented method of image splicing, the method comprising:
obtaining, by one or more processors, at least two groups of to-be-spliced images and
retrieving from header file information of the at least two groups of to-be-spliced images scanning information corresponding to the at least two groups of to-be-spliced images, wherein the scanning information comprises one or more pieces of information of image positions, image orientations, pixel spacing, slice thicknesses, object positions, and scanning beds corresponding to the at least two groups of to-be-spliced images;
determining, by the one or more processors and according to the scanning information, space coordinate information of three-dimensional volume data of the at least two groups of to-be-spliced images, wherein the at least two groups of to-be-spliced images share a same object coordinate system;
determining, by the one or more processors, an overlap area according to the space coordinate information of the three-dimensional volume data of the at least two groups of to-be-spliced images, wherein determining the overlap area comprises: comparing space coordinates of points in the three-dimensional volume data of the at least two groups of to-be-spliced images; and determining the points having the same space coordinates to be in the overlap area based on a result of the comparison;
determining, by the one or more processors, a splicing sequence for the at least two groups of to-be-spliced images according to the space coordinate information of the three-dimensional volume data of the at least two groups of to-be-spliced images, wherein the splicing sequence represents a sequence into which the at least two groups of to-be-spliced images are to be spliced;
registering (S103), by the one or more processors, the at least two groups of to-be-spliced images based on the overlap area to obtain a registration result; and
splicing (S104), by the one or more processors, the at least two groups of registered to-be-spliced images according to the splicing sequence and the registration result;
**characterized in that**, registering the at least two groups of to-be-spliced images based on the overlap area comprises:
determining a size of an extension range according to a size of an image processing operator, wherein the image processing operator comprises one of Roberts operator, Sobel operator, Prewitt operator, Laplacian operator and Gaussian-Laplacian operator;
extending the overlap area according to the size of the extension range to obtain the to-be-registered area; and
registering the at least two groups of to-be-spliced images based on the to-be-registered area.

2. The method of claim 1, wherein registering the at least two groups of to-be-spliced images based on the to-be-registered area comprises:
registering points having a same object coordinate in the to-be-registered area to a same position of an image.

3. The method of claim 2, where registering the points comprises:
registering the points having the same object coordinate in the to-be-registered area through a registration transformation matrix according to object coordinate information in DICOM (digital imaging and communications in medicine) information of the at least two groups of to-be-spliced images.

4. The method of claim 1, wherein registering the at least two groups of to-be-spliced images based on the to-be-registered area comprises:
obtaining a registration parameter through mutual information maximization; and
registering the points having a same feature in the to-be-registered area to a same position of image based on the registration parameter.

5. The method of claim 4, wherein obtaining the registration parameter comprises:
calculating mutual information of the at least two groups of to-be-spliced images; and
obtaining the registration parameter when the mutual information is the maximum.

6. The method of claim 1, wherein splicing the at least two groups of registered to-be-spliced images comprises:
processing one group of the at least two groups of to-be-spliced images by using the other one group of the at least two groups of to-be-spliced images as reference images; and
splicing the reference images and the processed to-be-spliced images according to the splicing sequence.

7. The method of claim 6, wherein processing one group of the at least two groups of to-be-spliced images comprises:
processing the one group of the at least two groups of to-be-spliced images by a predetermined transformation matrix or a predetermined registration operator such that images in the processed group have a same size as the reference images.

8. A system for image splicing comprising:
one or more processors (801); and
a non-transitory computer-readable storage medium (802) having instructions stored thereon which, when executed by the one or more processors (801), cause the one or more processors (801) to perform a method of image splicing, the method comprising:
obtaining at least two groups of to-be-spliced images and retrieving from header file information of the at least two groups of to-be-spliced images scanning information corresponding to the at least two groups of to-be-spliced images, wherein the scanning information comprises one or more pieces of information of image positions, image orientations, pixel spacing, slice thicknesses, object positions, and scanning beds corresponding to the at least two groups of to-be-spliced images;
determining, according to the scanning information, space coordinate information of three-dimensional volume data of the at least two groups of to-be-spliced images, wherein the at least two groups of to-be-spliced images share a same object coordinate system;
determining an overlap area according to the space coordinate information of the three-dimensional volume data of the at least two groups of to-be-spliced images, wherein determining the overlap area comprises: comparing space coordinates of points in the three-dimensional volume data of the at least two groups of to-be-spliced images; and determining the points having the same space coordinates to be in the overlap area based on a result of the comparison;
determining a splicing sequence for the at least two groups of to-be-spliced images according to the space coordinate information of the three-dimensional volume data of the at least two groups of to-be-spliced images, wherein the splicing sequence represents a sequence into which the at least two groups of to-be-spliced images are to be spliced;
registering the at least two groups of to-be-spliced images based on the overlap area to obtain a registration result; and
splicing the at least two groups of registered to-be-spliced images according to the splicing sequence and the registration result;
**characterized in that**, registering the at least two groups of to-be-spliced images based on the overlap area comprises:
determining a size of an extension range according to a size of an image processing operator, wherein the image processing operator comprises one of Roberts operator, Sobel operator, Prewitt operator, Laplacian operator and Gaussian-Laplacian operator;
extending the overlap area according to the size of the extension range to obtain the to-be-registered area; and
registering the at least two groups of to-be-spliced images based on the to-be-registered area.

9. A non-transitory computer-readable storage medium (802) having instructions stored thereon which, when executed by one or more processors (801), cause the one or more processors (801) to perform a method of image splicing, the method comprising:
obtaining at least two groups of to-be-spliced images and retrieving from header file information of the at least two groups of to-be-spliced images scanning information corresponding to the at least two groups of to-be-spliced images, wherein the scanning information comprises one or more pieces of information of image positions, image orientations, pixel spacing, slice thicknesses, object positions, and scanning beds corresponding to the at least two groups of to-be-spliced images;
determining, according to the scanning information, space coordinate information of three-dimensional volume data of the at least two groups of to-be-spliced images, wherein the at least two groups of to-be-spliced images share a same object coordinate system;
determining an overlap area according to the space coordinate information of the three-dimensional volume data of the at least two groups of to-be-spliced images, wherein determining the overlap area comprises: comparing space coordinates of points in the three-dimensional volume data of the at least two groups of to-be-spliced images; and determining the points having the same space coordinates to be in the overlap area based on a result of the comparison;
determining a splicing sequence for the at least two groups of to-be-spliced images according to the space coordinate information of the three-dimensional volume data of the at least two groups of to-be-spliced images, wherein the splicing sequence represents a sequence into which the at least two groups of to-be-spliced images are to be spliced;
registering the at least two groups of to-be-spliced images based on the overlap area to obtain a registration result; and
splicing the at least two groups of registered to-be-spliced images according to the splicing sequence and the registration result;
**characterized in that**, registering the at least two groups of to-be-spliced images based on the overlap area comprises:
determining a size of an extension range according to a size of an image processing operator, wherein the image processing operator comprises one of Roberts operator, Sobel operator, Prewitt operator, Laplacian operator and Gaussian-Laplacian operator;
extending the overlap area according to the size of the extension range to obtain the to-be-registered area; and
registering the at least two groups of to-be-spliced images based on the to-be-registered area.

## Patentansprüche

1. Computerimplementiertes Verfahren zur Bildzusammensetzung, wobei das Verfahren umfasst:
Erhalten, durch einen oder mehrere Prozessoren, von mindestens zwei Gruppen von zusammenzusetzenden Bildern und Abrufen, aus den Headerdateiinformationen der mindestens zwei Gruppen von zusammenzusetzenden Bildern, von Abtastinformationen, die den mindestens zwei Gruppen von zusammenzusetzenden Bildern entsprechen,
wobei die Abtastinformationen eine oder mehrere Informationen über Bildpositionen, Bildausrichtungen, Pixelabstände, Schichtdicken, Objektpositionen und Abtastbetten umfassen, die den mindestens zwei Gruppen von zusammenzusetzenden Bildern entsprechen;
Bestimmen, durch die einen oder mehreren Prozessoren und entsprechend den Abtastinformationen, von Raumkoordinateninformationen von dreidimensionalen Volumendaten der mindestens zwei Gruppen von zusammenzusetzenden Bildern wobei die mindestens zwei Gruppen von zusammenzusetzenden Bildern ein gleiches Objektkoordinatensystem teilen;
Bestimmen, durch die einen oder mehreren Prozessoren, eines Überlappungsbereichs gemäß den Raumkoordinateninformationen der dreidimensionalen Volumendaten der mindestens zwei Gruppen von zusammenzusetzenden Bildern, wobei das Bestimmen des Überlappungsbereichs umfasst: Vergleichen von Raumkoordinaten von Punkten in den dreidimensionalen Volumendaten der mindestens zwei Gruppen von zusammenzusetzenden Bildern; und Bestimmen, dass die Punkte mit denselben Raumkoordinaten in dem Überlappungsbereich liegen, basierend auf einem Ergebnis des Vergleichs;
Bestimmen, durch die einen oder mehreren Prozessoren, einer Zusammensetzungssequenz für die mindestens zwei Gruppen von zusammenzusetzenden Bildern gemäß den Raumkoordinateninformationen der dreidimensionalen Volumendaten der mindestens zwei Gruppen von zusammenzusetzenden Bildern, wobei die Zusammensetzungssequenz eine Sequenz darstellt, in die die mindestens zwei Gruppen von zusammenzusetzenden Bildern zusammenzusetzen sind;
Registrieren (S103), durch die einen oder mehreren Prozessoren, der mindestens zwei Gruppen von zusammenzusetzenden Bildern auf der Grundlage des Überlappungsbereichs, um ein Registrierungsergebnis zu erhalten; und
Zusammensetzen (S104), durch die einen oder mehreren Prozessoren, der mindestens zwei Gruppen von registrierten zusammenzusetzenden Bildern gemäß der Zusammensetzungssequenz und dem Registrierungsergebnis;
**dadurch gekennzeichnet, dass** das Registrieren der mindestens zwei Gruppen von zusammenzusetzenden Bildern basierend auf dem Überlappungsbereich umfasst:
Bestimmen einer Größe eines Erweiterungsbereichs gemäß einer Größe eines Bildverarbeitungsoperators, wobei der Bildverarbeitungsoperator einen aus einem Roberts-Operator, Sobel-Operator, Prewitt-Operator, Laplacian-Operator und Gauß-Laplacian-Operator umfasst;
Erweitern des Überlappungsbereichs entsprechend der Größe des Erweiterungsbereichs, um den zu registrierenden Bereich zu erhalten; und
Registrieren der mindestens zwei Gruppen von zusammenzusetzenden Bildern auf der Grundlage des zu registrierenden Bereichs.

2. Verfahren nach Anspruch 1, wobei das Registrieren der mindestens zwei Gruppen von zusammenzusetzenden Bildern auf der Grundlage des zu registrierenden Bereichs umfasst:
Registrieren von Punkten mit derselben Objektkoordinate in dem zu registrierenden Bereich an derselben Position eines Bildes.

3. Verfahren nach Anspruch 2, wobei das Registrieren der Punkte umfasst:
Registrieren der Punkte mit derselben Objektkoordinate in dem zu registrierenden Bereich durch eine Registrierungstransformationsmatrix gemäß den Objektkoordinateninformationen in DICOM-Informationen (Digital Imaging and Communications in Medicine) der mindestens zwei Gruppen von zusammenzusetzenden Bildern.

4. Verfahren nach Anspruch 1, wobei das Registrieren der mindestens zwei Gruppen von zusammenzusetzenden Bildern auf der Grundlage des zu registrierenden Bereichs umfasst:
Erhalten eines Registrierungsparameters durch Maximierung der gegenseitigen Informationen; und
Registrieren der Punkte mit demselben Merkmal in dem zu registrierenden Bereich an derselben Position des Bildes basierend auf dem Registrierungsparameter.

5. Verfahren nach Anspruch 4, wobei das Erhalten des Registrierungsparameters umfasst:
Berechnen der gegenseitigen Informationen der mindestens zwei Gruppen der zusammenzusetzenden Bilder; und
Erhalten des Registrierungsparameters, wenn die gegenseitigen Informationen das Maximum erreichen.

6. Verfahren nach Anspruch 1, wobei das Zusammensetzen der mindestens zwei Gruppen von registrierten zusammenzusetzenden Bildern umfasst:
Verarbeiten einer Gruppe der mindestens zwei Gruppen von zusammenzusetzenden Bildern unter Verwendung der anderen Gruppe der mindestens zwei Gruppen von zusammenzusetzenden Bildern als Referenzbilder; und
Zusammensetzen der Referenzbilder und der verarbeiteten zusammenzusetzenden Bilder gemäß der Zusammensetzungssequenz.

7. Verfahren nach Anspruch 6, wobei das Verarbeiten von einer Gruppe der mindestens zwei Gruppen von zusammenzusetzenden Bildern umfasst:
Verarbeiten der einen Gruppe der mindestens zwei Gruppen von zusammenzusetzenden Bildern durch eine vorgegebene Transformationsmatrix oder einen vorgegebenen Registrierungsoperator, so dass die Bilder in der verarbeiteten Gruppe die gleiche Größe wie die Referenzbilder haben.

8. System zum Zusammensetzen von Bildern, das umfasst:
einen oder mehrere Prozessoren (801); und
ein nichtflüchtiges computerlesbares Speichermedium (802) mit darauf gespeicherten Befehlen, die, wenn sie von den einen oder mehreren Prozessoren (801) ausgeführt werden, die einen oder mehreren Prozessoren (801) veranlassen, ein Verfahren zur Bildzusammensetzung durchzuführen, wobei das Verfahren umfasst:
Erhalten von mindestens zwei Gruppen von zusammenzusetzenden Bildern und Abrufen, aus den Headerdateiinformationen der mindestens zwei Gruppen von zusammenzusetzenden Bildern, von Abtastinformationen, die den mindestens zwei Gruppen von zusammenzusetzenden Bildern entsprechen, wobei die Abtastinformationen eine oder mehrere Informationen über Bildpositionen, Bildausrichtungen, Pixelabstände, Schichtdicken, Objektpositionen und Abtastbetten umfassen, die den mindestens zwei Gruppen von zusammenzusetzenden Bildern entsprechen;
Bestimmen, entsprechend den Abtastinformationen, von Raumkoordinateninformationen von dreidimensionalen Volumendaten der mindestens zwei Gruppen von zusammenzusetzenden Bildern wobei die mindestens zwei Gruppen von zusammenzusetzenden Bildern ein gleiches Objektkoordinatensystem teilen;
Bestimmen eines Überlappungsbereichs gemäß den Raumkoordinateninformationen der dreidimensionalen Volumendaten der mindestens zwei Gruppen von zusammenzusetzenden Bildern, wobei das Bestimmen des Überlappungsbereichs umfasst: Vergleichen von Raumkoordinaten von Punkten in den dreidimensionalen Volumendaten der mindestens zwei Gruppen von zusammenzusetzenden Bildern; und Bestimmen, dass die Punkte mit denselben Raumkoordinaten in dem Überlappungsbereich liegen, basierend auf einem Ergebnis des Vergleichs;
Bestimmen einer Zusammensetzungssequenz für die mindestens zwei Gruppen von zusammenzusetzenden Bildern gemäß den Raumkoordinateninformationen der dreidimensionalen Volumendaten der mindestens zwei Gruppen von zusammenzusetzenden Bildern, wobei die Zusammensetzungssequenz eine Sequenz darstellt, in die die mindestens zwei Gruppen von zusammenzusetzenden Bildern zusammenzusetzen sind;
Registrieren der mindestens zwei Gruppen von zusammenzusetzenden Bildern auf der Grundlage des Überlappungsbereichs, um ein Registrierungsergebnis zu erhalten; und
Zusammensetzen der mindestens zwei Gruppen von registrierten zusammenzusetzenden Bildern gemäß der Zusammensetzungssequenz und dem Registrierungsergebnis;
**dadurch gekennzeichnet, dass** das Registrieren der mindestens zwei Gruppen von zusammenzusetzenden Bildern auf der Grundlage des Überlappungsbereichs umfasst:
Bestimmen einer Größe eines Erweiterungsbereichs gemäß einer Größe eines Bildverarbeitungsoperators, wobei der Bildverarbeitungsoperator einen aus einem Roberts-Operator, Sobel-Operator, Prewitt-Operator, Laplacian-Operator und Gauß-Laplacian-Operator umfasst;
Erweitern des Überlappungsbereichs entsprechend der Größe des Erweiterungsbereichs, um den zu registrierenden Bereich zu erhalten; und
Registrieren der mindestens zwei Gruppen von zusammenzusetzenden Bildern auf der Grundlage des zu registrierenden Bereichs.

9. Nichtflüchtiges computerlesbares Speichermedium (802) mit darauf gespeicherten Befehlen, die, wenn sie von einen oder mehreren Prozessoren (801) ausgeführt werden, die einen oder mehreren Prozessoren (801) veranlassen, ein Verfahren zur Bildzusammensetzung durchzuführen, wobei das Verfahren umfasst:
Erhalten von mindestens zwei Gruppen von zusammenzusetzenden Bildern und Abrufen, aus den Headerdateiinformationen der mindestens zwei Gruppen von zusammenzusetzenden Bildern, von Abtastinformationen, die den mindestens zwei Gruppen von zusammenzusetzenden Bildern entsprechen, wobei die Abtastinformationen eine oder mehrere Informationen über Bildpositionen, Bildausrichtungen, Pixelabstände, Schichtdicken, Objektpositionen und Abtastbetten umfassen, die den mindestens zwei Gruppen von zusammenzusetzenden Bildern entsprechen;
Bestimmen, entsprechend den Abtastinformationen, von Raumkoordinateninformationen von dreidimensionalen Volumendaten der mindestens zwei Gruppen von zusammenzusetzenden Bildern wobei die mindestens zwei Gruppen von zusammenzusetzenden Bildern ein gleiches Objektkoordinatensystem teilen;
Bestimmen eines Überlappungsbereichs gemäß den Raumkoordinateninformationen der dreidimensionalen Volumendaten der mindestens zwei Gruppen von zusammenzusetzenden Bildern, wobei das Bestimmen des Überlappungsbereichs umfasst: Vergleichen von Raumkoordinaten von Punkten in den dreidimensionalen Volumendaten der mindestens zwei Gruppen von zusammenzusetzenden Bildern; und Bestimmen, dass die Punkte mit denselben Raumkoordinaten in dem Überlappungsbereich liegen, basierend auf einem Ergebnis des Vergleichs;
Bestimmen einer Zusammensetzungssequenz für die mindestens zwei Gruppen von zusammenzusetzenden Bildern gemäß den Raumkoordinateninformationen der dreidimensionalen Volumendaten der mindestens zwei Gruppen von zusammenzusetzenden Bildern, wobei die Zusammensetzungssequenz eine Sequenz darstellt, in die die mindestens zwei Gruppen von zusammenzusetzenden Bildern zusammenzusetzen sind;
Registrieren der mindestens zwei Gruppen von zusammenzusetzenden Bildern auf der Grundlage des Überlappungsbereichs, um ein Registrierungsergebnis zu erhalten; und
Zusammensetzen der mindestens zwei Gruppen von registrierten zusammenzusetzenden Bildern gemäß der Zusammensetzungssequenz und dem Registrierungsergebnis;
**dadurch gekennzeichnet, dass** das Registrieren der mindestens zwei Gruppen von zusammenzusetzenden Bildern auf der Grundlage des Überlappungsbereichs umfasst:
Bestimmen einer Größe eines Erweiterungsbereichs gemäß einer Größe eines Bildverarbeitungsoperators, wobei der Bildverarbeitungsoperator einen aus einem Roberts-Operator, Sobel-Operator, Prewitt-Operator, Laplacian-Operator und Gauß-Laplacian-Operator umfasst;
Erweitern des Überlappungsbereichs entsprechend der Größe des Erweiterungsbereichs, um den zu registrierenden Bereich zu erhalten; und
Registrieren der mindestens zwei Gruppen von zusammenzusetzenden Bildern auf der Grundlage des zu registrierenden Bereichs.

## Revendications

1. Procédé d'épissage d'images mis en œuvre par un ordinateur, le procédé comprenant :
l'obtention, par un ou plusieurs processeurs, d'au moins deux groupes d'images à épisser, et l'extraction, dans l'information de fichier d'en-tête desdits au moins deux groupes d'images à épisser, d'information de scannage correspondant auxdits au moins deux groupes d'images à épisser, dans lequel l'information de scannage comprend un ou plusieurs éléments d'information de positions d'image, d'orientations d'image, d'espacement de pixels, d'épaisseurs de tranche, de positions d'objet et de plateaux de scannage correspondant auxdits au moins deux groupes d'images à épisser ;
la détermination, par lesdits un ou plusieurs processeurs et en fonction de l'information de scannage, d'information de coordonnées spatiales de données de volume tridimensionnelles desdits au moins deux groupes d'images à épisser, dans lequel lesdits au moins deux groupes d'images à épisser partagent un même système de coordonnées d'objet ;
la détermination, par lesdits un ou plusieurs processeurs, d'une zone de chevauchement en fonction de l'information de coordonnées spatiales des données de volume tridimensionnelles desdits au moins deux groupes d'images à épisser, dans lequel la détermination de la zone de chevauchement comprend : la comparaison des coordonnées spatiales de points dans les données de volume tridimensionnelles desdits au moins deux groupes d'images à épisser ; et la détermination des points ayant les mêmes coordonnées spatiales comme étant dans la zone de chevauchement sur la base d'un résultat de la comparaison ;
la détermination, par lesdits un ou plusieurs processeurs, d'une séquence d'épissage pour lesdits au moins deux groupes d'images à épisser en fonction de l'information de coordonnées spatiales des données de volume tridimensionnelles desdits au moins deux groupes d'images à épisser, dans lequel la séquence d'épissage représente une séquence dans laquelle les images desdits au moins deux groupes d'images à épisser doivent être épissées ;
l'enregistrement (S103), par lesdits un ou plusieurs processeurs, desdits au moins deux groupes d'images à épisser sur la base de la zone de chevauchement pour obtenir un résultat d'enregistrement ; et
l'épissage (S104), par lesdits un ou plusieurs processeurs, desdits au moins deux groupes d'images à épisser enregistrées en fonction de la séquence d'épissage et du résultat d'enregistrement ;
**caractérisé en ce que** l'enregistrement desdits au moins deux groupes d'images à épisser sur la base de la zone de chevauchement comprend :
la détermination de la taille d'une plage d'extension en fonction de la taille d'un opérateur de traitement d'image, dans lequel l'opérateur de traitement d'image comprend un opérateur parmi l'opérateur de Roberts, l'opérateur de Sobel, l'opérateur de Prewitt, l'opérateur de Laplace et l'opérateur de Gauss-Laplace ;
l'extension de la zone de chevauchement en fonction de la taille de la plage d'extension pour obtenir la zone à enregistrer ; et
l'enregistrement desdits au moins deux groupes d'images à épisser sur la base de la zone à enregistrer.

2. Procédé selon la revendication 1, dans lequel l'enregistrement desdits au moins deux groupes d'images à épisser sur la base de la zone à enregistrer comprend :
l'enregistrement de points ayant une même coordonnée d'objet dans la zone à enregistrer à une même position d'une image.

3. Procédé selon la revendication 2, dans lequel l'enregistrement des points comprend :
l'enregistrement des points ayant la même coordonnée d'objet dans la zone à enregistrer via une matrice de transformation d'enregistrement en fonction de l'information de coordonnées d'objet dans de l'information d'imagerie numérique et de communications en médecine, DICOM (Digital Imaging and Communications in Medicine), desdits au moins deux groupes d'images à épisser.

4. Procédé selon la revendication 1, dans lequel l'enregistrement desdits au moins deux groupes d'images à épisser sur la base de la zone à enregistrer comprend :
l'obtention d'un paramètre d'enregistrement grâce à la maximisation d'information mutuelle ; et
l'enregistrement des points ayant une même caractéristique dans la zone à enregistrer à une même position de l'image sur la base du paramètre d'enregistrement.

5. Procédé selon la revendication 4, dans lequel l'obtention du paramètre d'enregistrement comprend :
le calcul d'information mutuelle desdits au moins deux groupes d'images à épisser ; et
l'obtention du paramètre d'enregistrement quand l'information mutuelle est maximale.

6. Procédé selon la revendication 1, dans lequel l'épissage des images desdits au moins deux groupes d'images à épisser enregistrées comprend :
le traitement d'un groupe desdits au moins deux groupes d'images à épisser en utilisant ledit autre groupe desdits au moins deux groupes d'images à épisser comme images de référence ; et
l'épissage des images de référence et des images à épisser traitées en fonction de la séquence d'épissage.

7. Procédé selon la revendication 6, dans lequel le traitement d'un groupe desdits au moins deux groupes d'images à épisser comprend :
le traitement dudit un groupe desdits au moins deux groupes d'images à épisser par une matrice de transformation prédéterminée ou un opérateur d'enregistrement prédéterminé de telle sorte que les images dans le groupe traité aient la même taille que les images de référence.

8. Système d'épissage d'images comprenant :
un ou plusieurs processeurs (801) ; et
un support de stockage non volatil lisible par un ordinateur (802) sur lequel sont stockées des instructions qui, quand elles sont exécutées par ledit au moins un processeur (801), commandent auxdits un ou plusieurs processeurs (801) de mettre en œuvre un procédé d'épissage d'images, le procédé comprenant :
l'obtention d'au moins deux groupes d'images à épisser et l'extraction, dans l'information de fichier d'en-tête, desdits au moins deux groupes d'information de scannage d'images à épisser correspondant auxdits au moins deux groupes d'images à épisser, dans lequel l'information de scannage comprend un ou plusieurs éléments d'information de positions d'image, d'orientations d'image, d'espacement de pixels, d'épaisseurs de tranche, de positions d'objet et de plateaux de scannage correspondant auxdits au moins deux groupes d'images à épisser ;
la détermination, en fonction de l'information de scannage, d'information de coordonnées spatiales de données de volume tridimensionnelles desdits au moins deux groupes d'images à épisser, dans lequel lesdits au moins deux groupes d'images à épisser partagent un même système de coordonnées d'objet ;
la détermination d'une zone de chevauchement en fonction de l'information de coordonnées spatiales des données de volume tridimensionnelles desdits au moins deux groupes d'images à épisser, dans lequel la détermination de la zone de chevauchement comprend : la comparaison des coordonnées spatiales de points dans les données de volume tridimensionnelles desdits au moins deux groupes d'images à épisser ; et la détermination des points ayant les mêmes coordonnées spatiales comme étant dans la zone de chevauchement sur la base d'un résultat de la comparaison ;
la détermination d'une séquence d'épissage pour lesdits au moins deux groupes d'images à épisser en fonction de l'information de coordonnées spatiales des données de volume tridimensionnelles desdits au moins deux groupes d'images à épisser, dans lequel la séquence d'épissage représente une séquence selon laquelle les images desdits au moins deux groupes d'images à épisser doivent être épissées ;
l'enregistrement desdits au moins deux groupes d'images à épisser sur la base de la zone de chevauchement pour obtenir un résultat d'enregistrement ; et
l'épissage des images desdits au moins deux groupes d'images à épisser enregistrées en fonction de la séquence d'épissage et au résultat d'enregistrement ;
**caractérisé en ce que** l'enregistrement desdits au moins deux groupes d'images à épisser sur la base de la zone de chevauchement comprend :
la détermination de la taille d'une plage d'extension en fonction de la taille d'un opérateur de traitement d'image, dans lequel l'opérateur de traitement d'image comprend un opérateur parmi l'opérateur de Roberts, l'opérateur de Sobel, l'opérateur de Prewitt, l'opérateur de Laplace et l'opérateur de Gauss-Laplace ;
l'extension de la zone de chevauchement en fonction de la taille de la plage d'extension pour obtenir la zone à enregistrer ; et
l'enregistrement desdits au moins deux groupes d'images à épisser sur la base de la zone à enregistrer.

9. Support de stockage non volatil lisible par un ordinateur (802) sur lequel sont stockées des instructions qui, quand elles sont exécutées par un ou plusieurs processeurs (801), commandent auxdits un ou plusieurs processeurs (801) de mettre en œuvre un procédé d'épissage d'images, le procédé comprenant :
l'obtention d'au moins deux groupes d'images à épisser et l'extraction, dans l'information de fichier d'en-tête desdits au moins deux groupes d'images à épisser, d'information de scannage correspondant auxdits au moins deux groupes d'images à épisser, dans lequel l'information de scannage comprend un ou plusieurs éléments d'information de positions d'image, d'orientations d'image, d'espacement de pixels, d'épaisseurs de tranche, de positions d'objet et de plateaux de scannage correspondant auxdits au moins deux groupes d'images à épisser ;
la détermination, en fonction de l'information de scannage, d'information de coordonnées spatiales de données de volume tridimensionnelles desdits au moins deux groupes d'images à épisser, dans lequel lesdits au moins deux groupes d'images à épisser partagent un même système de coordonnées d'objet ;
la détermination d'une zone de chevauchement en fonction de l'information de coordonnées spatiales des données de volume tridimensionnelles desdits au moins deux groupes d'images à épisser, dans lequel la détermination de la zone de chevauchement comprend : la comparaison des coordonnées spatiales de points dans les données de volume tridimensionnelles desdits au moins deux groupes d'images à épisser ; et la détermination des points ayant les mêmes coordonnées spatiales comme étant dans la zone de chevauchement sur la base d'un résultat de la comparaison ;
la détermination d'une séquence d'épissage pour lesdits au moins deux groupes d'images à épisser en fonction de l'information de coordonnées spatiales des données de volume tridimensionnelles desdits au moins deux groupes d'images à épisser, dans lequel la séquence d'épissage représente une séquence dans laquelle les images desdits au moins deux groupes d'images à épisser doivent être épissées ;
l'enregistrement desdits au moins deux groupes d'images à épisser sur la base de la zone de chevauchement pour obtenir un résultat d'enregistrement ; et
l'épissage des images desdits au moins deux groupes d'images à épisser enregistrées en fonction de la séquence d'épissage et au résultat d'enregistrement ;
**caractérisé en ce que** l'enregistrement desdits au moins deux groupes d'images à épisser sur la base de la zone de chevauchement comprend :
la détermination de la taille d'une plage d'extension en fonction de la taille d'un opérateur de traitement d'image, dans lequel l'opérateur de traitement d'image comprend un opérateur parmi l'opérateur de Roberts, l'opérateur de Sobel, l'opérateur de Prewitt, l'opérateur de Laplace et l'opérateur de Gauss-Laplace ;
l'extension de la zone de chevauchement en fonction de la taille de la plage d'extension pour obtenir la zone à enregistrer ; et
l'enregistrement desdits au moins deux groupes d'images à épisser sur la base de la zone à enregistrer.
